# EUROPEAN PATENT APPLICATION

(11) **EP 2 266 416 A1**
(43) Date of publication of application: **29.12.2010**
(21) Application number: 10165791.4
(22) Date of filing: 14.06.2010
(51) Int. Cl.: A23G 9/04, A23G 9/22

(54) **Crushed-ice drink maker**

(30) Priority: 25.06.2009 IT BO20090412
(71) Applicant: Carpigiani Group - ALI S.p.A., 40011 Anzola Dell'Emilia (BO) (IT)
(72) Inventor: Escriva Estruch, Vicente, 40011 Anzola Dell'Emilia (Bologna) (IT); Cocchi, Gino, 40011 Anzola Dell'Emilia (Bologna) (IT)
(74) Representative: Ghioni, Carlo Raoul Maria

(57) **Abstract**

A crushed-ice drink maker comprises a containment tank (3) having an upper chamber (6) for containing a mixture to be processed and a lower chamber (5) for containing a mixture being processed, a dispenser tap (4) located in the lower chamber (5), a cooling circuit evaporator (8) located in the lower chamber (5) surrounded by a motor-driven stirring element (7) which rotates about a substantially horizontal axis (X), the upper chamber (6) being separated from the lower chamber (5) by a partition (13) made of material whose thermal conductivity is between 5 and 500 Wm⁻¹K-1. The crushed-ice drink maker (1) also comprises a stirrer (16) which is at least partly located in the upper chamber (6) for recirculating the fluid in the upper chamber.

## Description

This invention relates to a crushed-ice drink maker, that is to say, a machine for producing and dispensing granitas, slush drinks and the like. Crushed-ice drink makers comprise a tank, normally transparent, in which a liquid mixture (water or a mixture with a water or milk base) is introduced, mixed and chilled and eventually dispensed in the form of a granita, slush drink, smoothie or the like through a tap mounted in the vicinity of the bottom of the tank itself.

The tank comprises an upper chamber closed by a removable lid and a bottom chamber containing a screw type stirring element extending around an evaporator of a cooling circuit.

The lower chamber of the tank is substantially cylindrical in shape so that the stirrer-evaporator unit fits into it exactly to avoid the formation of stagnant zones and to allow the product being made to be effectively and thoroughly stirred.

The lower chamber of the tank is connected to and directly faces the upper chamber which is in the form of a hopper and which is designed to contain the above mentioned mixture used to top up the bottom chamber from which the product is dispensed. In these crushed-ice drink makers, the mixture takes a very long time to reach the optimum dispensing temperature because, when the mixture to be worked is introduced into the upper chamber, it tends to mix with the mixture in the lower chamber, raising its temperature.

To avoid this drawback in the prior art, the upper chamber is physically separated from the lower chamber by an interposed metal partition provided with through orifices which place the two chambers in fluid communication with each other.

That way, the mixture passes from the upper to the lower chamber in a controlled manner, thus avoiding sudden increases in the temperature of the mixture in the lower chamber.

Also, the metal partition tends to cool down since it is in contact with the mixture in the lower chamber, thus preliminarily cooling the mixture in the upper chamber (which is also in contact with the partition) and reducing the time needed to take the mixture to the required dispensing temperature once it has been transferred to the lower chamber.

Prior art crushed-ice drink makers described briefly above are not free of disadvantages, however.

In effect, the mixture present in the upper chamber and in contact with the partition tends to freeze, especially if a relatively extended length of time passes between one dispensing and the next.

The icy layer that forms tends to obstruct the orifices through which the mixture passes from the upper chamber to the lower chamber, thus preventing the crushed-ice drink maker from working correctly. In this context, the technical purpose which forms the basis of the present invention is to propose a crushed-ice drink maker which overcomes the above mentioned drawbacks of the prior art.

More specifically, this invention has for an aim to provide a crushed-ice drink maker that requires relatively short lengths of time to take the granita to be dispensed to the correct temperature. Another aim of the invention is to provide a crushed-ice drink maker that performs optimally even if an extended length of time passes between one dispensing and the next.

The technical purpose indicated and the aims specified are substantially achieved by a crushed-ice drink maker comprising the technical features described in one or more of the appended claims. Further features and advantages of this invention are more apparent in the detailed description below, with reference to a preferred, non-limiting embodiment of a crushed-ice drink maker, illustrated in the accompanying drawings, in which:
- Figure 1 is a perspective view of a crushed-ice drink maker according to this invention;
- Figure 2 is an enlarged perspective view of a detail of the crushed-ice drink maker of Figure 1 with some parts cut away in order to better illustrate others;
- Figure 3 is a cross section through the plane III-III of the crushed-ice drink maker of Figure 1, with some parts cut away in order to better illustrate others;
- Figure 3a is a cross section through the plane III-III of the crushed-ice drink maker of Figure 1 in a preferred embodiment, with some parts cut away in order to better illustrate others;
- Figure 4 is a perspective view of another detail from Figure 1; and
- Figure 5 is another perspective view of the detail of Figure 4.

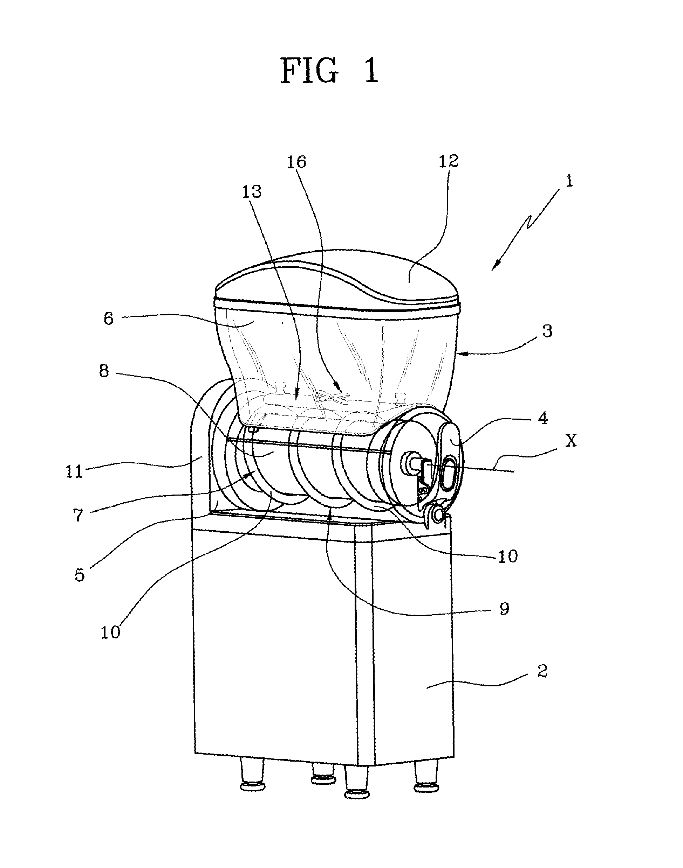

With reference to Figure 1, the numeral 1 denotes in its entirety a crushed-ice drink maker according to this invention.

In the context of this invention, crushed-ice drink maker means a machine for producing and dispensing granitas, slush drinks and the like.

The crushed-ice drink maker 1 comprises a base 2 which houses a customary cooling system, not illustrated.

Mounted on the base 2 is a containment tank 3, made preferably of a transparent material and used for processing and, more specifically, mixing and cooling, a mixture that will be dispensed in the form of a granita, slush drink, smoothie or the like through a dispensing tap 4 mounted near the bottom of the tank 3 itself.

The tank 3 comprises a lower chamber 5 and an upper chamber 6 forming an integral part of the tank 3 which is therefore made as a single part. Extending inside the lower chamber 5 is a motor-driven stirring element 7 designed to continuously stir the mixture being cooled.

For the purpose, the lower chamber 5 houses an evaporator 8 forming part of the cooling system and designed to cool the mixture contained in the lower chamber 5.

The stirring element 7 extends around the evaporator 8.

More specifically, the stirring element 7 rotates about a substantially horizontal axis X and comprises a screw 9 with a plurality of coils 10. The lower chamber 5 is substantially cylindrical in shape and extends around the horizontal axis X in such a way that the evaporator 8 and the stirring element 7 fit into it substantially exactly.

The stirring element 7 is rotationally driven about the axis X and around the evaporator 8 by a motor, not illustrated, which is preferably mounted on a shoulder 11 of the base 2 sealed flush against an opening of the lower chamber 5.

The upper chamber 6 is substantially in the shape of a truncated pyramid (that is to say, in the shape of a hopper) and is delimited by a front wall, facing the operator, a rear wall and two lateral walls.

The opening at the top of the upper chamber 6 is closed by a removable lid 12.

The lower chamber 5 and the upper chamber 6 are placed face to face with each other and are separated by a partition 13.

Preferably, the partition 13 is arc-shaped along a substantially cylindrical profile and guarantees continuity of shape with the lower chamber 5.

The partition 13 is made of a material whose thermal conductivity is between 5 and 500 Wm⁻¹K⁻¹, in particular a metallic material, preferably steel.

That way, the evaporator 8 and the stirring element 7 operate directly only on the mixture in the lower chamber 5, although the mixture contained in the upper chamber 6 is cooled by the partition 13.

The partition 13 comprises a plurality of openings to allow fluid to pass from the upper chamber 6 to the lower chamber 5.

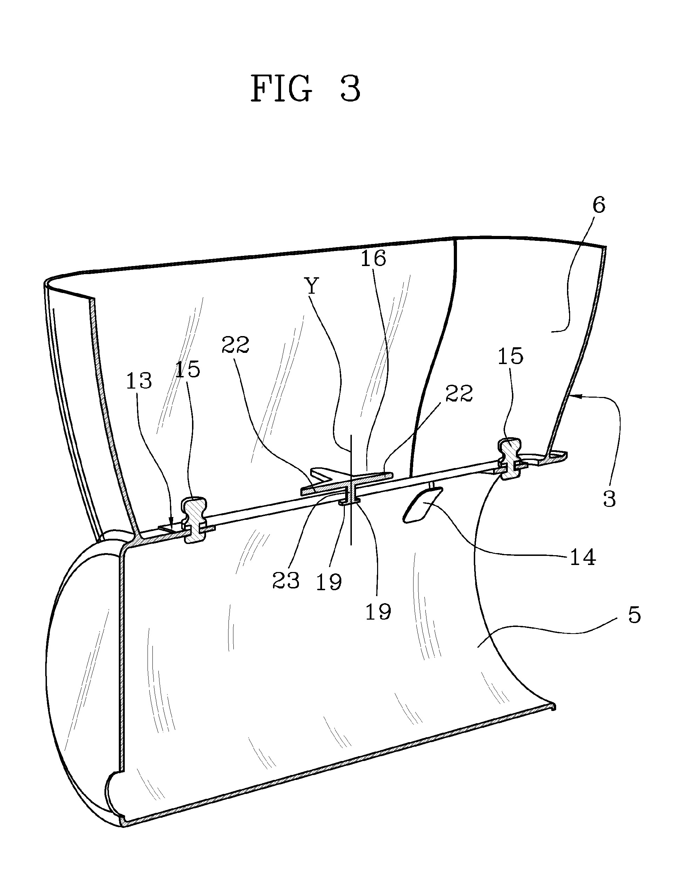

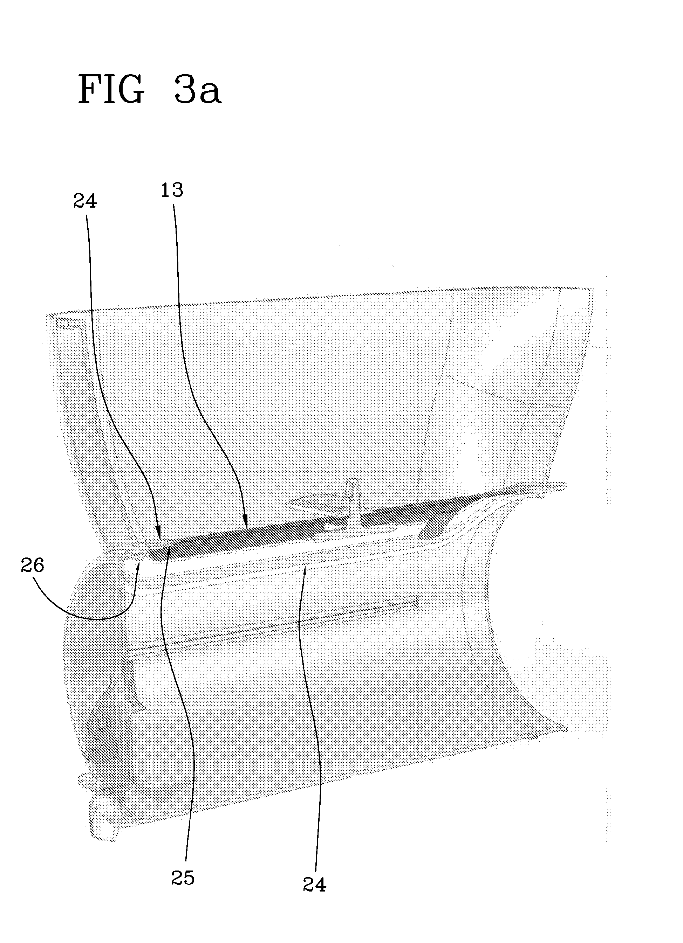

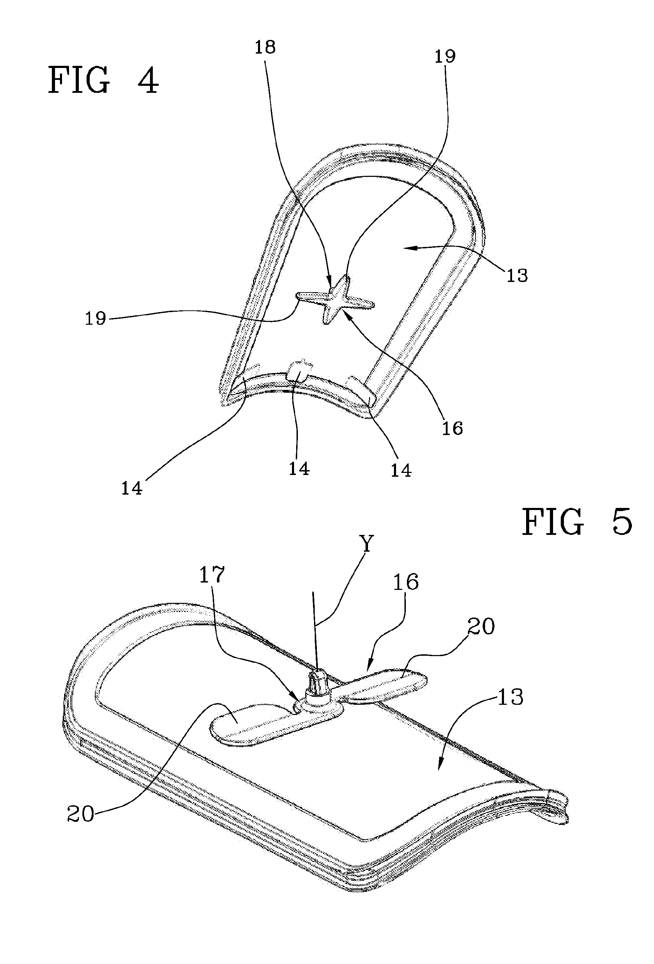

These openings are operated on by valve elements 14 (see Figures 3 and 4) for transferring the fluid from the upper chamber 6 to the lower chamber 5 when a negative pressure is created in the lower chamber 5 following the dispensing of product.

More specifically, the valve elements 14 comprise elastic lip membranes 15 located on the partition 13 on the side facing towards the lower chamber 5, as illustrated in Figure 5.

The partition 13 is removably connected to the tank 3.

As illustrated in Figure 3 (where the stirring element 7 and the evaporator 8 are not shown) the partition 13 is connected to the tank 3 by pressure plugs 15 which engage facing holes made in the tank 3 and in the partition 13.

In the preferred embodiment illustrated in Figure 3a, the partition 13 is connected to the tank 3 by an annular seal 24 having a free edge directed towards the inside of the tank 3 and provided with a seat 25, also annular, for containing and supporting the outer edge of the partition 13. The seal also has a locking lip 26, also annular, designed to secure the seal 24 against the inside wall of the bottom end of the tank 3 and to provide stable support for the partition 13 itself. Advantageously, the crushed-ice drink maker 1 comprises a stirrer 16 which is at least partly located in the upper chamber 6 for recirculating the fluid in the upper chamber.

That way, the mixture present in the upper chamber 6 does not tend to freeze on contact with the partition 13, since it is kept in continuous motion by the stirrer 16.

More specifically, the stirrer 16 is rotationally driven by the stirring element 7 located in the lower chamber 5 and which, as mentioned, is motor driven and rotated continuously.

This feature makes it possible to avoid using a specific motor to drive the stirrer 16.

The stirrer 16 comprises a first portion 17 which extends in the upper chamber 6 (Figure 5) and a second portion 18 which extends in the lower chamber 5 (Figure 4), in such a way that the stirrer 16, in particular its second portion 18, is engaged and driven by the stirring element 7.

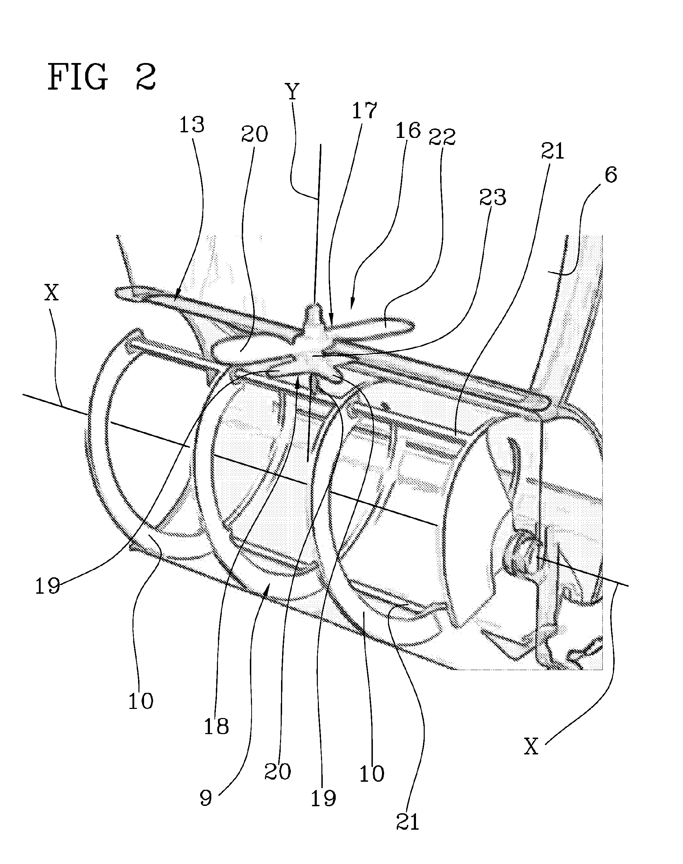

In the preferred embodiment, the second portion 18 comprises at least one projection 19 engaged by at least one slider 20 of the stirring element 7 (as illustrated in Figure 2 where, for better understanding, the evaporator 8 is not shown).

The slider 20 is integral with the stirring element 7 and rotates as one with the latter, engaging the projection 19 with each revolution of the stirring element 7 about its axis X.

The projection 19 is rotatable about an axis Y perpendicular to the axis X of rotation of the stirring element 7 and extends in a direction substantially parallel with the axis X of rotation of the stirring element 7 (Figure 2).

The slider 20 extends in a direction substantially parallel with the axis of rotation Y of the projection 19 so that, with each revolution of the stirring element 7, the slider 20 comes into contact with the projection 19 and transmits to the latter a force that causes it to rotate about its axis Y of rotation.

In this regard, the stirring element 7 comprises at least one crosspiece 21 connecting two consecutive coils 10 of the screw 9. The slider 20 is positioned on the crosspiece 21 (in the accompanying drawings, there are two crosspieces 21) and extends away from it (Figure 2).

The first portion 17 of the stirrer 16 is equipped with a plurality of blades 22 able to rotate about the axis Y of rotation of the projection 19 (Figures 2 and 5).

More specifically, the blades 22 are keyed to a rotary shaft 23 which joins the first and second portions of the stirrer 16.

In the preferred embodiment of the invention, the blades 22 extend in the vicinity of the partition 13, that is to say, they are located close to the partition 13 in such a way as to maximize the recirculating effect on the mixture which is in direct contact with the partition 13.

Preferably there are two sliders 20 and connecting crosspieces 21 positioned at 180° from each other relative to the axis X of rotation of the stirring element 7.

The invention achieves the preset aims.

In effect, the crushed-ice drink maker 1 does not take long to cool the granita to be dispensed to the correct temperature thanks to the presence of the partition 13 having thermal conductivity of between 5 and 500 Wm⁻¹K⁻¹_{.}

At the same time, thanks to the presence of the stirrer 16, the crushed-ice drink maker 1 prevents the mixture above the partition 13 from freezing, thus guaranteeing the correct operation of the dispenser even if an extended length of time passes between one dispensing and the next.

## Claims

1. A crushed-ice drink maker comprising a containment tank (3) having an upper chamber (6) for containing a mixture to be processed and a lower chamber (5) for containing a mixture being processed, a dispenser tap (4) located in the lower chamber (5), a cooling circuit evaporator (8) located in the lower chamber (5) surrounded by a motor-driven stirring element (7) which rotates about a substantially horizontal axis (X), the upper chamber (6) being separated from the lower chamber (5) by a partition (13) made of material whose thermal conductivity is between 5 and 500 Wm⁻¹K⁻¹; **characterized in that** it comprises a stirrer (16) which is at least partly located in the upper chamber (6) for recirculating the fluid in the upper chamber.

2. The crushed-ice drink maker according to claim 1, **characterized in that** stirrer (16) rotation is driven by the stirring element (7) located in the lower chamber (5).

3. The crushed-ice drink maker according to claim 2, **characterized in that** the stirrer (16) comprises a first portion (17) extending in the upper chamber (6) and a second portion (18) extending in the lower chamber (5); the second portion (18) being connected to the first portion (17) and engaging with the stirring element (7).

4. The crushed-ice drink maker according to claim 3, **characterized in that** the second portion (18) comprises at least one projection (19) and the stirring element (7) comprises at least one slider (20); the slider (20) rotating as one with the stirring element (7) and, with each revolution, engaging the projection (19).

5. The crushed-ice drink maker according to claim 4, **characterized in that** the projection (19) can rotate about an axis (Y) perpendicular to the axis (X) of rotation of the stirring element (7) and extends in a direction substantially parallel with the axis (X) of rotation of the stirring element (7); the slider (20) extending in a direction substantially parallel with the axis of rotation (Y) of the projection (19).

6. The crushed-ice drink maker according to claim 5, **characterized in that** the stirring element (7) comprises a screw (9) and at least one crosspiece (21) connecting two coils (10) of the screw (9); the slider (20) being positioned on the crosspiece (21).

7. The crushed-ice drink maker according to any of the claims from 3 to 6, **characterized in that** the first portion (17) comprises a plurality of blades (22) able to rotate about an axis perpendicular to the axis (X) of rotation of the stirring element (7).

8. The crushed-ice drink maker according to claim 7, **characterized in that** the blades (22) extend near to the partition (13).

9. The crushed-ice drink maker according to any of the claims from 3 to 8, **characterized in that** the first portion (17) and the second portion (18) of the stirrer (16) are joined together by a shaft (23) rotating about an axis (Y) which is perpendicular to the axis (X) of rotation of the stirring element (7).

10. The crushed-ice drink maker according to any of the foregoing claims, **characterized in that** the partition (13) comprises a plurality of openings on which valve elements (14) operate for transferring fluid from the upper chamber (6) to the lower chamber (5) after some product has been dispensed.

11. The crushed-ice drink maker according to claim 10, **characterized in that** the valve elements (14) are located on the partition (13) on the side facing towards the lower chamber (5) and comprise elastic lip membranes.

12. The crushed-ice drink maker according to any of the foregoing claims, **characterized in that** the partition (13) is made of metal material.

13. The crushed-ice drink maker according to claim 12, **characterized in that** the partition (13) is removably connected to the tank (3).
